# EUROPÄISCHE PATENTSCHRIFT

(11) **EP 1 857 259 B1**
(45) Veröffentlichungstag und Bekanntmachung des Hinweises auf die Patenterteilung: **07.07.2010**
(21) Anmeldenummer: 07009577.3
(22) Anmeldetag: 12.05.2007
(51) Int. Cl.: B29C 70/08, B32B 1/08, F16L 9/12, B29C 65/48, C09J 5/06, F16L 11/08, F16L 9/133, B29C 35/02, B29K 27/18, B29L 23/00

(54) **Verfahren zur Herstellung eines Rotationssymmetrischen Hohlkörpers aus einer faserverstärkten Kunststoffarmierung und einer mit PVE modifizierten PTFE-Auskleidung**
Process of manufacture of a rotationally symmetric hollow bodies made of a reinforced fibre plastic and a PTFE coating modified with PPVE
Procédé de fabrication d'un corps creux symétrique en plastique renforcé par des fibres comprenant un revêtement en PTFE modifié par du PPVE

(30) Priorität: 15.05.2006 DE 102006022904
(43) Veröffentlichungstag der Anmeldung: 21.11.2007
(73) Patentinhaber: K & W GmbH, 59394 Nordkirchen-Capelle (DE)
(72) Erfinder: Troschitz Ralf, Dr., 40470 Düsseldorf (DE)
(74) Vertreter: Tarvenkorn, Oliver

(56) Entgegenhaltungen:
- EP-A- 0 318 415
- EP-A- 1 024 320
- EP-A- 1 589 270
- WO-A-95/22359
- DE-C1- 10 203 123
- FR-A- 2 864 465

## Beschreibung

Die vorliegende Erfindung betrifft ein Verfahren zur Herstellung eines rotationssymmetrischen Hohlkörpers, aufweisend eine modifizierte PTFE-Auskleidung und eine Armierung aus Kunststoff mit den Merkmalen des Oberbegriffs des Anspruchs 1.

Die erfindungsgemäßen Werkstoffverbunde enthalten eine Kunststoffarmierung und eine Auskleidung (Liner) aus Polytetrafluorethylen, wobei beide Bestandteile durch ein neues. Herstellverfahren fest verbunden sind.

Die Erfindung bezieht sich auf einen rotationssymmetrisch angeordneten, insbesondere zylindrischen aber auch kegelförmig aufgebauten Hohlkörper, bestehend aus einer PTFE-Auskleidung (dem rohr- bzw. kegelförmigen sogenannten PTFE-Innenliner) und einer damit fest verbundenen Armierung aus einem Kunststoff, insbesondere einem Faserverstärkten Kunststoff.

Rohrleitungssysteme aus faserverstärkten Kunststoffen auf der Basis von Kunstharzen mit thermoplastischer Auskleidung werden in der chemischen Prozessindustrie (CPI) für den Transport und das Handling von korrosiven und aggressiven Flüssigkeiten und Gasen eingesetzt.

Bei derartigen Systemen kommt es zu einer Aufgabentrennung zwischen Auskleidung des Rohrs (thermoplastischer Innenliner) und der Armierung (Kunststoff, i.d.R. faserverstärkt). Der thermoplastische Innenliner ist verantwortlich für den Schutz vor kritischen korrosiven Einwirkungen auf die Armierung, wobei er nicht nur an sich beständig sein muss, sondern auch gleichzeitig eine nicht zu große (schädliche) Permeationsmenge an die Armierung abgeben darf.

Bei geringen Drücken und/oder Medien- und Umgebungstemperaturen kann bei der Konzeption des Rohrleitungssystems auf die Ausführung in Verbundbauweise (mit Armierung) verzichtet werden, wenn die physikalische Belastbarkeit des Innenlinermaterials ausreicht.

Im Normalfall werden aber Verbundsysteme aus Liner und Armierung für Rohrleitungssysteme in der CPI eingesetzt, da Steifigkeit und Festigkeit der für den Liner verwendeten Thermoplaste insbesondere bei höheren Temperaturen häufig nicht die an sie gestellten Anforderungen erfüllen.

Als Linerwerkstoffe werden neben den Polyolefinen wie Polyethylen (PE) und Polypropylen (PP) auch der chlorierte Thermoplast Polyvinylchlorid (PVC) und der teilfluorierte Thermoplast Polyvinylidenfluorid (PVDF) eingesetzt. Für die Armierung werden Rohre aus glasfaserverstärkten Kunststoffen auf der Basis von ungesättigten Polyesterharzen (UP-GF) und Phenacrylatharzen (oder auch Vinylesterharzen) (PHA-GF bzw. VE-GF) verwendet. Verbundrohre aus den genannten Kunststoffen mit einer Auskleidung aus den genannten Thermoplasten sind in Norm DIN 16 964 aufgeführt.

Um den Verbund mit der Armierung zu gewährleisten, kommen unterschiedliche bewährte Methoden zum Einsatz. Diese sind in nachfolgender Tabelle mit den werkstoffspezifischen Anforderungen der Norm an die Segment-Haftscherfestigkeit aufgeführt.

| Werkstoff der Auskleidung | Notwendige Segment-Haftscherfestigkeit nach DIN 16 964 (Verfahren B) | Herstellung der Verbindung durch |
|---|---|---|
| PE | 2,5 N/mm² | Einbettung eines Glasgewebes unter Wärmeeinwirkung ("Einbrennen") |
| PP | 3, 5 N/mm² | |
| PVC | 5,0 N/mm² | Applizierung eines Haftharzes etwa auf Basis von Isophathalsäure ("Verkleben") |
| PVDF | 7,0 N/mm² | Chemische Aktivierung der Lineroberfläche ("Ätzung" mit "Verkleben") |

Die verwendeten Liner weisen eine Wanddicke von etwa 3 mm auf. Diese ist abhängig von der Geometrie und auch von der chemischen Beaufschlagung der Rohre. In Sonderfällen werden auch Auskleidungen mit einer Schichtdicke von über 1 cm verwendet.

Neben den erwähnten Standardmaterialien kommen in neuerer Zeit aufgrund der steigenden Anforderungen an höhere Standzeiten und damit an die chemische Widerstandsfähigkeit der eingesetzten Werkstoffe auch beständigere Linermaterialien zum Einsatz.

Hierzu zählen insbesondere der teilfluorierte Kunststoff Etyhlen-Chlortrifluorethylen-Copolymerisat (ECTFE) und die perfluorierten Kunststoffe Tetrafluorethylen-Perfluorvinylether (FEP), Perfluoralkoxy-Tetrafluorethylen-Copolymerisat (PFA), modifiziertes Perfluoralkoxy-Tetrafluorethylen-Copolymerisat (PFA-M) und Polytetrafluorethylen (PTFE), die auch für Anwendungen bei höheren Temperaturen geeignet sind.

Eine Sonderstellung nimmt hierbei das teilkristalline PTFE ein. Es weist unter den handelsüblichen Kunststoffen eine relativ hohe thermische Belastbarkeit auf (-260°C bis +300°C), so liegt etwa der Schmelzbereich mit 320°C bis 340°C deutlich höher als der von PFA mit 310°C bis 320°C.

Nachteilig wirkt sich allerdings aus, dass PTFE bei einer Erwärmung oberhalb des Schmelzbereiches nicht thermoplastisch verarbeitbar ist, vielmehr geht es in einen hochviskosen gelartigen Zustand über. Dies liegt unter anderem an der ausgesprochen hohen PTFE-Molmasse. Auch bei Einsatztemperaturen deutlich unterhalb des Schmelzbereiches muss das spezielle Eigenschaftsprofil beachtet werden. PTFE zeigt im Temperaturbereich von 20°C bis 200°C eine ausgesprochen hohe Wärmeausdehnung. Hieraus resultiert eine hohe Scherbelastung der Verbindungsschicht PTFE-Liner/Armierung aus faserverstärktem Kunststoff (Verhältnis von Wärmeausdehnungskoeffizient PTFE zu FVK etwa 10 mit α_{PTFE} = 23 • 10⁻⁵ K⁻¹). So ist ein einfaches "Einbrennen" einer Glasgewebekaschierung in der PTFE-Oberfläche zum einen aufgrund der extrem hohen Schmelzviskosität und zum anderen aufgrund der benötigten hohen Haftscherfestigkeiten nicht möglich.

Weiterhin lässt sich PTFE - wie etwa PVC - aufgrund geringer zwischenmolekularer Kräfte und geringer Polarisierbarkeit der Fluoratome nur schlecht verkleben. Um überhaupt eine Adhäsion zu erzielen, kann die PTFE-Oberfläche chemisch vorbehandelt werden, etwa durch in Ammoniak gelöstes Natrium. Die hiermit erzielten Haftfestigkeiten sind aber im Hinblick auf die extremen Anforderungen nicht ausreichend.

Deshalb wurden in der Vergangenheit neue Verfahren entwickelt, die zu befriedigenden Haftscherfestigkeiten führten. Solche Verfahren sind z.B. in der DE 102 03 123 offenbart. In dieser Schrift wird die Verbindung zwischen Auskleidung und Armierung mittels einer komplex aufgebauten Zwischenlage realisiert, die aus mehreren Schichten aufgebaut ist und speziell in Sondermaschinen gefertigt werden muss.

Die DE 29 35 295 A1 offenbart die Herstellung eines rotationssymmetrischen Hohlkörpers, aufweisend eine fluorpolymere Auskleidung und Armierung aus faserverstärktem Kunststoff. Das darin offenbarte Herstellungsverfahren sieht allerdings ungewöhnliche Arbeitsschritte vor, um die radiale Expansion des Hohlkörpers zu bewirken und diesen so über eine Zwischenlage gegen die Armierung zu pressen, damit eine Verbindung erreicht wird.

Aufgabe der vorliegenden Erfindung ist es, rotationssymmetrische Hohlkörper mit einer fest verbundenen PTFE-Auskleidung zu schaffen, die ohne komplizierte Maschinen einfach hergestellt werden können und über ein den Belastungen angepasstes Eigenschaftsprofil hinsichtlich Haftscherfestigkeiten und Haftzugfestigkeiten verfügen.

Diese Aufgabe wird durch ein Verfahren mit den Merkmalen des Anspruchs 1 gelöst.

Es wird dabei modifiziertes PTFE verwendet, das gegenüber herkömmlichem PTFE verbesserte Eigenschaften aufweist. Bei modifiziertem PTFE wird in die lineare Kette des PTFE-Polymers zusätzlich der Modifier Perfluorpropylvinylether (PPVE) eingebracht. Hierbei handelt es sich um den gleichen Modifier, wie er auch bei dem dem PTFE verwandten Perfluoralkoxy-Copolymer (PFA) zum Einsatz kommt. Allerdings unterscheiden sich das modifizierte PTFE und das PFA durch die Anzahl der modifizierten Gruppen und durch ihr Molekulargewicht. Der Modifier-Anteil bei modifiziertem PTFE beträgt weniger als 1%, während er bei PFA über 5% beträgt.

Das Vorprodukt kann zu einem beliebigen Zeitpunkt des Herstellungsverfahrens zur Formgebung auf eine Achse aufgeschoben werden, so z.B. auf einen Stahldorn.

Der Schmelzklebstoff geht durch die Erwärmung in den flüssigen Zustand, dringt z.T. in den unmittelbar benachbarten Bereich der Schicht aus einem textilem Faserprodukt ein und stellt so eine Verbindung zwischen letzterem und dem PTFE her. Das Vorprodukt wird zu diesem Zweck bis zu einer Temperatur im Bereich der Kristallit-Schmelztemperatur von PTFE oberhalb von 300°C erhitzt.

Aufgrund der hohen Wärmeausdehnung von PTFE im Vergleich zu Fasern wirken bei derartigen Temperaturen hohe Normalspannungen in radialer Richtung im Übergangsbereich zwischen PTFE-Auskleidung und textilem Faserprodukt. Der dazwischen liegende Schmelzklebstoff "verschweißt" bei derartigen Bedingungen quasi die PTFE-Auskleidung mit dem textilen Faserprodukt.

Bei dem Schmelzklebstoff handelt es sich um einen perfluorierten Kunststoff wie PFA, PFA-M oder FEP (Fluorethylenpropylen) Bevorzugt wird dabei PFA verwendet, das dem PTFE chemisch sehr ähnlich ist, aufgrund des geringeren Molekulargewichts jedoch thermoplastisch formbar ist.Bei den textilen Faserprodukten handelt es sich um Gewebe, Gelege oder Gewirke. Dabei bestehen die Fasern aus einer Substanz, deren Schmelzpunkt deutlich oberhalb des Schmelzpunktes von PTFE liegt. Geeignete Fasermaterialien sind z.B. Kohlenstoff-, Glas-, Bor-, oder Aramidfasern, bzw. Gemische bzw. Verbünde derselben.

In einer bevorzugten Ausgestaltung des Verfahrens ist vorgesehen, dass der Schmelzklebstoff in Form eines rotationssymmetrischen Hohlkörpers aufgebracht wird. Hierbei könnte es sich z.B. um einen folienartigen Schlauch handeln.

In einer bevorzugten Ausgestaltung des Verfahrens ist vorgesehen, dass nach dem Aufbringen der mindestens einen Schicht aus einem textilem Faserprodukt eine weitere Schicht aus einem textilem Faserprodukt aufgebracht wird, die als Widerlager bei der Erwärmung des Vorprodukts fungiert und so gewährleistet, dass das Produkt trotz Wärmeausdehnung des PTFE eine rotationssymmetrische Form behält. In dieser Ausgestaltung ist dafür Sorge zu tragen, dass der Schmelzklebstoff so dosiert ist, dass er während der Erwärmung nur die erste Schicht aus einem textilem Faserprodukt benetzt, nicht jedoch die zweite, weiter außen gelegene Schicht, damit letztere nach dem Herstellungsprozess entfernt werden kann.

In einer weiteren bevorzugten Ausgestaltung des Verfahrens ist vorgesehen, dass das erhaltene Produkt nach der Erwärmung des Vorprodukts und ggf. Entfernung der weiteren Schicht aus einem textilem Faserprodukt mit einem Kunststoff armiert wird. Hierbei kann es sich um jeden der in der Einleitung genannten Kunststoffe handeln, insbesondere jedoch um einen faserverstärkten Kunststoff. Für den Fachmann ist es überdies ein Leichtes, einen für diesen Zweck geeigneten Kunststoff auszuwählen. Die in Frage kommenden Armierungsverfahren sind dem Fachmann ebenfalls bekannt.

Auch in dieser Ausgestaltung ist dafür Sorge zu tragen, dass der Schmelzklebstoff so dosiert ist, dass er während der Erwärmung nur den innen gelegenen Bereich der ersten Schicht aus einem textilem Faserprodukt benetzt, damit für den Verbund mit der Kunststoffarmierung eine rauhe Oberfläche bereitsteht, so dass eine innige Verbindung zwischen dem Vorprodukt und der Armierung hergestellt werden kann.

Bevorzugt handelt es sich bei den Schichten aus textilen Faserprodukten um textile Schläuche oder textile Wickelschichten.

Die PTFE-Auskleidung weist bevorzugt eine Dicke zwischen einschließlich 1 mm und 20 mm auf, besonders bevorzugt zwischen 2 und 8 mm, je nach physikalischen und chemischen Anforderungen, während die Schmelzklebstoffschicht bevorzugt eine Dicke zwischen einschließlich 10 µm und 2000 µm aufweist, besonders bevorzugt zwischen 20 und 50 µm.

Besonders bevorzugt wird für die Herstellung ein antistatisch eingestelltes PTFE und/oder ein antistatisch eingestellter Armierungskunststoff verwendet.

Die vorliegende Erfindung wird durch die im Folgenden gezeigten und diskutierten Figuren genauer erläutert. In den schematischen Zeichnungen ist jeweils die Innenseite des rotationssymmetrischen Hohlkörpers unten angeordnet.

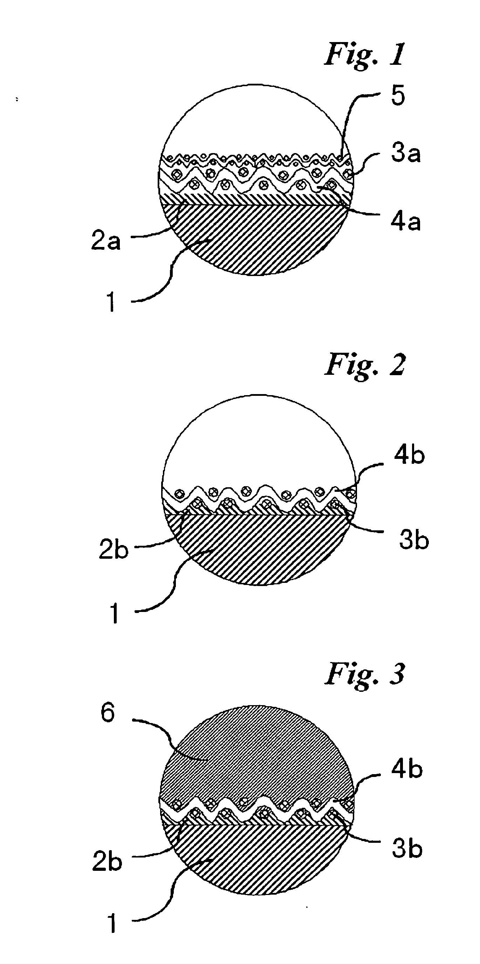

In Fig. 1 ist die bei Umgebungstemperatur vorbereitete Struktur am Beispiel eines zylindrischen Körpers dargestellt, und bildet die Querschnittsfläche der Wandung ab. Die hohlkörperförmige PTFE-Auskleidung 1 ist dabei zweckmäßigerweise auf eine (hier nicht abgebildeten) Metallform aufgebracht. Oberhalb der Auskleidung ist der Schmelzklebstoff aus FEP bzw. PFA in Form eines Folienschlauchs lose aufgebracht. Hierauf sind ebenfalls lose das erste textile Faserprodukt hier dargestellt in Form eines Gewebes bestehend aus Schussfaden 3 und Kettfaden 4) in Form eines Textilschlauchs und das zweite textile Faserprodukt ("Deckgewebe") 5 in Form von Wicklungen aufgebracht.

Diese Struktur wird dann bis zu einer Temperatur erwärmt, bei der der Schmelzklebstoff schmilzt und einen Haftverbund zwischen Auskleidung 1 und textilem Faserprodukt 3, 4 ausbildet. Nach erfolgter Abkühlung wird das Deckgewebe 5 durch Abwickeln entfernt.

Fig. 2 zeigt das ausgekühlte Produkt, nachdem das Deckgewebe entfernt wurde. Gut zu erkennen ist, dass der Schmelzklebstoff 2 so dosiert wurde, dass er während der Erwärmung nur den innen gelegenen Bereich der ersten Schicht aus einem textilem Faserprodukt 3, 4 benetzt. Auf diese Weise kann das Deckgewebe, das lediglich als Widerlager zur Formerhaltung diente, leicht entfernt werden, und es steht für den Verbund mit der Kunststoffarmierung eine raue Oberfläche bereit, so dass eine innige Verbindung zwischen dem Vorprodukt und der Armierung hergestellt werden kann.

Fig. 3 stellt das mit einer faserverstärkten Kunststoffarmierung 6 verstärkte Endprodukt aus Fig. 2 dar.

## Patentansprüche

1. Verfahren zur Herstellung eines rotationssymmetrischen Hohlkörpers, aufweisend eine PTFE-Auskleidung (1) und eine Armierung aus Kunststoff (2), aufweisend die folgenden Schritte:
a) Bereitstellung eines rotationssymmetrischen Hohlkörpers aus einem PTFE;
b) Aufbringen eines Schmelzklebstoff-Materials auf den rotationssymmetrischen Hohlkörper;
c) Aufbringen mindestens einer Schicht aus einem textilem Faserprodukt (3,4) auf den so hergestellten lockeren Verbund aus PTFE-Hohlkörper und Schmelzklebstoff, wobei das textile Faserprodukt (3,4) in Form eines textilen Schlauches oder einer textilen Wickelschicht auf den Verbund aus PTFE-Hohlkörper und Schmelzklebstoff aufgebracht wird, wobei die Fasern aus Kohlenstoff-, Glas-, Bor-, oder Aramidfasern, bzw. Gemische bzw. Verbünde derselben bestehen und
d) Erwärmen des so hergestellten Vorprodukts dergestalt, dass mit Hilfe des Schmelzklebstoffs eine Verbindung zwischen der PTFE-Auskleidung und dem textilem Faserprodukt hergestellt wird, wobei das Vorprodukt bis zu einer Temperatur im Bereich der Kristallit-Schmelztemperatur von PTFE oberhalb von 300 °C erwärmt wird;
**dadurch gekennzeichnet,**
- **dass** der rotationssymmetrische Hohlkörper aus einem mit weniger als 1% Perfluorpropylvinylether (PPVE) modifizierten PTFE besteht;
- **dass** das Schmelzklebstoff-Material einen perfluorierten Kunststoff wie PFA, PFA-M oder FEP enthält;

2. Verfahren nach Anspruch 1, **dadurch gekennzeichnet, dass** der Schmelzklebstoff in Form eines rotationssymmetrischen Hohlkörpers auf den PTFE-Hohlkörper aufgebracht wird.

3. Verfahren nach Anspruch 1 oder 2, **dadurch gekennzeichnet, dass** nach dem Aufbringen der mindestens einen Schicht aus einem textilem Faserprodukt eine weitere Schicht aus einem textilem Faserprodukt aufgebracht wird, die als Widerlager bei der Erwärmung des Vorprodukts fungiert und so gewährleistet, dass das Produkt eine rotationssymmetrische Form behält.

4. Verfahren nach wenigstens einem der vorherigen Ansprüche, **dadurch gekennzeichnet, dass** das erhaltene Produkt nach der Erwärmung des Vorprodukts und ggf. Entfernung der weiteren Schicht aus textilem Faserprodukt mit einem Kunststoff armiert wird.

5. Verfahren nach wenigstens einem der vorherigen Ansprüche, **dadurch gekennzeichnet, dass** es sich bei den textilen Faserprodukten um Gewebe, Gelege oder Gewirke handelt.

6. Verfahren nach wenigstens einem der vorherigen Ansprüche, **dadurch gekennzeichnet, dass** einem der vorherigen Ansprüche, **dadurch gekennzeichnet, dass** die PTFE-Auskleidung eine Dicke zwischen einschließlich 1 mm und 20 mm aufweist, und die Schmelzklebstoffschicht eine Dicke zwischen einschließlich 10 µm und 2000 µm aufweist.

7. Verfahren nach wenigstens einem der vorherigen Ansprüche, **dadurch gekennzeichnet, dass** für die Herstellung ein antistatisch eingestelltes PTFE und/oder ein antistatisch eingestellter Armierungskunststoff verwendet wird.

8. Verfahren nach wenigstens einem der vorherigen Ansprüche, **dadurch gekennzeichnet, dass dadurch gekennzeichnet, dass** der Anteil von PPVE bei dem PFA über 5% beträgt.

## Claims

1. Process for manufacturing a rotationally symmetrical hollow body with a PTFE lining (1) and plastic reinforcement (2), consisting of the following steps:
a) Preparation of a rotationally symmetrical hollow body made of PTFE;
b) Application of a fusible adhesive material onto the rotationally symmetrical hollow body;
c) Application of at least one layer of a textile fibre product (3, 4) onto the loosely bonded unit thus created from the PTFE hollow body and the fusible adhesive, whereby the textile fibre product (3, 4) is applied to the unit comprising the PTFE hollow body and the fusible adhesive in the form of a textile sleeve or a wrapped layer of textile, whereby the fibres consist of carbon, glass, boron or aramide fibres or mixtures or combinations thereof; and
d) Heating the precursor product thus created in such a way that the fusible adhesive creates a bond between the PTFE lining and the textile fibre product, whereby the precursor product is heated to a temperature in the same range as the crystallite melting temperature of PTFE, above 300°C,
**characterized in that**
- the rotationally symmetrical hollow body consists of a PTFE that has been modified with less than 1% perfluoropropyl vinyl ether (PPVE);
- the fusible adhesive substance contains a perfluorinated plastic such as PFA, PFA-M or FEP.

2. A procedure in accordance with claim 1, **characterized in that** the fusible adhesive is applied to the PTFE hollow body as a rotationally symmetrical hollow body.

3. A procedure in accordance with claim 1 or claim 2, **characterized in that** a further layer consisting of a textile fibre product is applied after the application of at least one layer of a textile fibre product, acting as a reinforcement when the precursor product is heated and thereby ensuring that the product retains its rotationally symmetrical shape.

4. A procedure in accordance with at least one of the above claims, **characterized in that** the product obtained after heating the precursor product and if necessary removing any other layers of textile fibre products is reinforced with a plastic.

5. A procedure in accordance with at least one of the above claims, **characterized in that** the textile fibre products are woven, matted or net fabrics.

6. A procedure in accordance with one of the above claims, **characterized in that** the thickness of the PTFE lining is between 1 and 20 millimetres and the thickness of the fusible adhesive layer is between 10 and 2000 micrometres.

7. A procedure in accordance with one of the above claims, **characterized in that** the PTFE and/or the reinforcement plastic used in the manufacture have been adjusted to have anti-static properties.

8. A procedure in accordance with at least one of the above claims, **characterized in that** the proportion of PPVE in the PFA is greater than 5%.

## Revendications

1. Procédé de fabrication d'un corps creux symétrique en rotation, présentant un revêtement de PTFE (1) et une armature en matière plastique (2), présentant les étapes suivantes :
a) mise à disposition d'un corps creux symétrique en rotation en un PTFE ;
b) application d'un matériau adhésif à chaud sur le corps creux symétrique en rotation ;
c) application d'au moins une couche d'un produit à fibres textiles (3, 4) sur le matériau composite ouvert constitué du corps creux de PTFE et d'adhésif à chaud, le produit à fibres textiles (3, 4) sous la forme d'un manchon textile ou d'une couche d'enveloppement textile étant appliqué sur le composite constitué du corps creux de PTFE et d'adhésif à chaud, les fibres consistant en fibres de carbone, de verre, de bore ou d'aramide, ou de mélanges ou composites de ceux-ci, et
d) chauffage du produit précurseur ainsi fabriqué, de telle sorte qu'à l'aide de l'adhésif à chaud, on obtienne une liaison entre le revêtement de PTFE et du produit à fibres textiles, le précurseur étant chauffé jusqu'à une température dans la plage de températures de fusion des cristallites du PTFE supérieure à 300° C,
**caractérisé en ce que**
- le corps creux symétrique en rotation est constitué d'au moins un PTFE modifié avec moins de 1% par l'éther de perfluoropropylvinyle (PPVE) ;
- le matériau adhésif à chaud contient une matière plastique perfluorée telle que le PFA, PFA-M ou FEP.

2. Procédé selon la revendication 1, **caractérisé en ce que** l'adhésif à chaud est appliqué sous la forme d'un corps creux symétrique en rotation sur le corps creux en PTFE.

3. Procédé selon la revendication 1 ou 2, **caractérisé en ce que**, après l'application d'au moins une couche en produit de fibres textiles, une autre couche en produit de fibres textiles, qui agit comme un appui lors du chauffage du précurseur et ainsi, assure que le produit prenne une forme symétrique en rotation, est appliquée.

4. Procédé selon au moins l'une des revendications précédentes, **caractérisé en ce que** le produit obtenu est armé après le chauffage du précurseur et éventuellement, l'élimination de l'autre couche de produit de fibres textiles à l'aide d'un adhésif.

5. Procédé selon au moins l'une des revendications précédentes, **caractérisé en ce que** les produits de fibres textiles sont des tissus, des tissus non tissés ou des étoffes à maille.

6. Procédé selon au moins l'une des revendications précédentes, **caractérisé en ce que** le revêtement de PTFE présente une épaisseur entre 1 mm et 20 mm inclusivement, et la couche d'adhésif à chaud présente une épaisseur entre 10 µm et 2000 µm inclusivement.

7. Procédé selon au moins l'une des revendications précédentes, **caractérisé en ce que** l'on utilise, pour la production, un PTFE ajusté de façon à être antistatique et/ou une matière plastique armée ajustée de façon à être antistatique.

8. Procédé selon au moins l'une des revendications précédentes, **caractérisé en ce que** la proportion de PPVE est supérieure à 5 % pour le PFA.
